# EUROPEAN PATENT APPLICATION

(11) **EP 2 682 868 A2**
(43) Date of publication of application: **08.01.2014**
(21) Application number: 13168697.4
(22) Date of filing: 22.05.2013
(51) Int. Cl.: G06F 9/54

(54) **Remote notification and action system**

(30) Priority: 02.07.2012 US 201213540231
(71) Applicant: Ricoh Company, Ltd., Tokyo 143-8555 (JP)
(72) Inventor: Hong, Jiang, Cupertino, CA California 95014 (US)
(74) Representative: Maury, Richard Philip

(57) **Abstract**

A method for managing notifications related to detected events and managing actions received in response to the notifications is presented. The method comprises detecting an event that has occurred at a network device; determining an event type for the event; and based, at least in part, on the type of the event, determining a notification recipient, and whether any action should be performed to address the event. In response to determining that an action should be performed to address the event, one or more actions are determined, and it is determined whether a preferred communications method with the notification recipient is specified. In response to determining that the preferred communications method for the notification recipient is specified, a notification specifying the event and the one or more actions are transmitted to the notification recipient according to the preferred communications method. The method is performed by one or more computing devices.

## Description

### FIELD OF THE INVENTION

This invention relates generally to managing notifications and actions, and more specifically, to managing notifications generated by network devices, communicating the notifications to user devices, and managing action responses received from the user devices.

### BACKGROUND OF THE INVENTION

The approaches described in this section are approaches that could be pursued, but not necessarily approaches that have been previously conceived or pursued. Therefore, unless otherwise indicated, the approaches described in this section may not be prior art to the claims in this application and are not admitted to be prior art by inclusion in this section.

Executing software applications in a computer system often causes a multitude of system and user events. The events may be generated at various stages of application execution and may indicate whether the execution has succeeded or failed. For example, as a print device executes a print job, a print application executing on the print device may generate an event indicating that the printing was successful, or that the printing failed. If the printing failed, the event information may also indicate the reason for the failure, which could include a lack of paper or a paper jam in the printer.

While some events relate to non-critical conditions, other events may relate to conditions that are critical in nature. The critical events may be related to errors or problems, which in turn, may entail some type of intervention. For example, if an execution of a particular print job was unsuccessful because it was interrupted by a paper jam, then a print application executed on the print device may issue an error notification suggesting to resolve the paper jam to address the printing problem.

However, in some situations, determining a type of suitable intervention and an entity that could intervene may be difficult. For example, it might be difficult to determine the individual who is qualified and available to intervene. In some circumstances, a user or a system administrator may be qualified to resolve the problem, but he might be unavailable or unreachable.

Determining the best way of contacting the individual who could resolve a problem indicated in a notification may also be difficult. For example, a user who sent a print job to a print device may be able to clear a paper jam at the print device, but determining whether the user should be contacted via an email, a phone call, or a text message may be difficult. A system administrator may also be able to clear a paper jam at the print device, but, it may be difficult to reach the system administrator when the system administrator is assisting other customers or is no available on-site. Trying to reach the system administrator via e-mail may be difficult if the system administrator does not have access to his email when working at a customer's site. Trying to contact the system administrator via a phone call or a text message may also be difficult if the system administrator keeps their mobile phone turned off when working at the customer's site.

Based on the foregoing, there is a need for an approach for managing remote notifications and actions.

### SUMMARY OF THE INVENTION

A method for managing notifications related to detected events and managing actions received in response to the notifications is presented. The method comprises detecting that an event occurred at a network device; determining a type of the event; and based, at least in part, on the type of the event, determining a notification recipient and whether any action should be performed to address the event. In response to determining that an action should be performed to address the event: one or more actions, which the notification recipient is authorized to perform, are determined. Further, it is determined whether a preferred communications method for the notification recipient is specified. In response to determining that the preferred communications method for the notification recipient is specified, a notification specifying the event and the one or more actions is transmitted to the notification recipient according to the preferred communications method.

The approach may be implemented as a computer-implemented method, by an apparatus, system or device, or by one or more computer-readable media storing instructions which, when processed by one or more processors, implement the approach.

### BRIEF DESCRIPTION OF THE DRAWINGS

In the figures of the accompanying drawings like reference numerals refer to similar elements.
FIG. 1 is a block diagram that depicts an example system for managing remote notifications and actions;
FIG. 2 is a block diagram that depicts an example system for managing remote notifications and actions;
FIG. 3 is a flow chart that depicts example steps performed by a remote notification and action system;
FIG. 4 is a flow chart that depicts an example process of dispatching an event notification;
FIG. 5 is a flow chart that depicts an example process of generating a response to an event notification;
FIG. 6 is a flow chart that depicts an example of processing a response;
FIG. 7 is a flow chart that depicts an example process of defining a communications method for a user; and
FIG. 8 is a block diagram of a computer system on which embodiments may be implemented.

### DETAILED DESCRIPTION OF THE EMBODIMENTS

In the following description, for the purposes of explanation, numerous specific details are set forth in order to provide a thorough understanding of the present invention. It will be apparent, however, to one skilled in the art that the present invention may be practiced without these specific details. In other instances, well-known structures and devices are shown in block diagram form in order to avoid unnecessarily obscuring the present invention. Various aspects of the invention are described hereinafter in the following sections:
I. OVERVIEW
II. SYSTEM ARCHITECTURE
III. EVENT NOTIFICATIONS
IV. RESPONSES TO NOTIFICATIONS
V. DISPATCHING EVENT NOTIFICATIONS
VI. GENERATING RESPONSES TO EVENT NOTIFICATIONS
VII. PROCESSING RESPONSES TO EVENT NOTIFICATIONS
VIII. IMPLEMENTATION MECHANISMS

### I. OVERVIEW

In a system that comprises a variety of devices and executes a variety of software applications, the system components usually generate a vast amount of events. Some of the events are non-critical in nature, and can be merely flagged or even ignored. Other events may be critical and may entail some intervention or a responsive action.

Once an event is detected in a system, the event may be categorized and a type of the event may be associated with the event. For example, the events related to printing problems may be categorized as printing problem events, or more specific, the events related to printing problems on a particular printer may be categorized as printing problem events specific to the particular printer.

Based at least on a type of the event, a notification indicating a detected event may be created. For example, if the event is categorized as a printing problem, then a printing problem notification may be created. Based at least on a type of the event, it may also be determined whether any action to remedy the event should be recommended. For example, if the event is categorized as a printing problem related to a paper jam, then a recommended action may suggest that a paper jam problem be resolved at the print device.

In an embodiment, a notification recipient may be determined for a notification. Once the notification recipient is determined, a determination may be made to determine whether a preferred communications method for communicating with the notification recipient has been specified. The preferred communications method may be specified by the notification recipient in a recipient profile created at the time the notification recipient subscribed to the system services, or at any other time when the notification recipients decided to indicate the preferred communications method.

However, if a notification recipient has not specified a preferred communications method, then a default communications method for communicating with a notification recipient may be identified.

In an embodiment, a notification indicating a detected event is sent to a notification recipient using either a preferred communications method or a default communications method. If one or more recommended actions have been determined, then the notification also includes information about the one or more actions for the notification recipient to consider.

Once a notification recipient receives a notification and information about one or more recommended actions, the recipient may review the recommended actions, and determine whether any of the recommended actions should be performed.

Depending on a method in which the system communicated a notification and recommended actions to a notification recipient, the recommended actions may be presented to the notification recipient in a form of a displayed menu, an audio generated menu, or any other type of a list or menu. For example, if a preferred communications method with a notification recipient includes communicating via an email, then a list of recommended actions may be displayed for the notification recipient in a body portion of the email that contains the notification. However, if a preferred communications method includes communicating via a telephone, then an audio menu, containing options indicating recommended actions, may be played for the notification recipient.

If a notification recipient determines that one or more actions are to be performed to remedy the problem indicated in a notification, then the notification recipient may communicate the selected action(s) to the system. The selected action(s) may be sent to the system in a form of a response indicating the selected action(s) to be performed by the system to resolve the problem.

Upon receiving a response to a notification, the response is parsed and a selected action to be performed by the system to resolve a problem indicated in the notification is identified. The action (or actions) may be translated into one or more commands recognizable by the device on which the problem was detected. For example, if the selected action indicated that a particular print device should switch from printing using paper from an A4 paper tray to printing using paper from a legal paper tray, then the selected action may be translated into commands understood by the particular print device that would cause the switch. Execution of the selected action should cause the particular print device to switch from printing using the A4 format paper to printing using the legal format paper.

Some aspects of the approach may be explained via the following example. If a user tried to print a document on a remote printer, but the printer encountered a paper jam problem, then a printer application may detect a paper jam event, create a notification indicating the paper jam event, determine a notification recipient to be the user, identify a preferred communications method for the recipient, and send the notification to the user using the preferred communications method to suggest one or more recommended actions to the user. The list of suggestions (a list of recommended actions) may include removing the paper jam, canceling the printing, saving the document for later printing, using another paper tray to print, or some other actions. If the user specified that they prefer to receive notifications via email, then the notification indicating the paper jam problem and the recommended actions may be sent to the user as an email. Upon receiving a notification email, the user may determine that the best action at this time is to save the document for a later printing, communicate information about the best action in a form of an email to the remote printer, and cause the remote printer to save the document for printing at a later time

### II. SYSTEM ARCHITECTURE

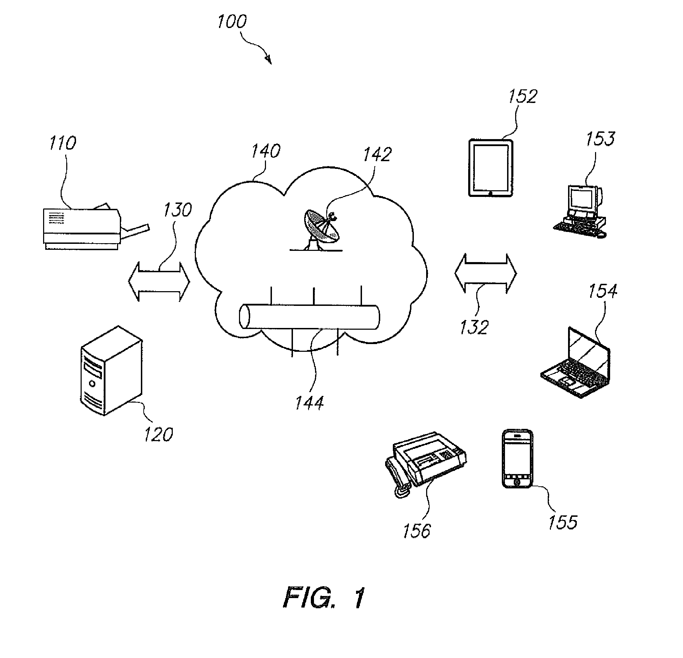

FIG. 1 is a block diagram that depicts an example system 100 for managing remote notifications and actions. An example system 100 comprises a network device 110, communications links 130 and 132, a network 140, and remote user devices. Optionally, system 100 may also include one or more computer servers 120.

For the purpose of explanation, FIG. 1 depicts one network device 110 and one optional server 120; however, embodiments of the described approach are applicable to any number of network devices 110, optional servers 120, or other network elements. Also, merely for the purpose of explanation, FIG. 1 depicts five remote devices 152 - 156; however, embodiments may comprise any number of remote devices 152 - 156. The remote devices 152 - 156 are depicted merely to provide examples of various remote user devices.

A network device 110 may be any type of device configured to process data and communicate with a network 140. For example, network device 110 may be any type of computing device, such as a personal computer, laptop, tabled computer, personal digital assistant, wireless device, mobile device, router, switch or other data processing/transmitting device. In the context of print device, network device 110 may be a printer, a multifunctional peripheral device, a copy machine, a fax machine, a scanner, or any other device for entering and/or outputting data.

Network device 110 may be also configured to generate various events. An event may indicate a success, failure, or other condition that has occurred in executing a particular task. For example, an event may be an indication of a successfully performed task, a problem in executing a particular task, an error that occurred at network device 110, or an indication of any other condition occurring in network device 110. Additional examples of events are described below.

In an embodiment, network device 110 is a print device and is configured to receive print data, process the received print data and generate hardcopies of an electronic version of the print data. As the print device receives and processes the printing data, the print device may generate various events associated with the respective stages of processing. For example, as the print device finishes receiving the print data for a particular print job, the print device may generate an event indicating that the receiving of the print data was successful. This type of an event may be considered as a non-critical event and may indicate that no further action or intervention needs to be performed in response to the particular event.

However, other events may be considered as critical events. Examples of such events may include error events. Once an error event is detected, a responsive action may need to be performed to remedy the error. In such situations, one or more recommended actions may be determined as suggested to remedy the error.

In an embodiment, network device 110 is also configured to transmit event information and optionally information about recommended actions via a communications link 130 to network 140, and then to a remote user device.

Network device 110 may also be configured to receive responses to the transmitted notification from remote user devices. For example, upon transmitting a notification indicating a particular event and one or more recommended action, network device 110 may receive via network 140 and communications link 130, a response indicating a selected action, selected from the recommended actions, and that the selected action should be performed to address the particular event.

Network device 110 may also be configured to analyze a received response, identify a selected action in the received response, and identify commands or instructions that may be performed to address the particular event.

In an embodiment, network device 110 does not process event information internally. Instead, network device 110 is configured to transmit the event information to a server 120 (or to network 140 and then to server 120), and rely on server 120 for processing the event information. For example, network device 110 may send messages to server 120 to indicate that one or more events have occurred at network device 110. Network device 110 may "push" the event messages to server 120 each time an event occurs at network device 110. Alternatively, network device 110 may store the events internally at network device 110 and rely on other applications, such as daemon processes, to access storage of network device 110, retrieve the stored event information and communicate the event information to server 120.

A server 120 is configured to process event information received from network device 110. For example, server 120 may be configured to receive an event indication, create a notification indicating the event, determine whether any intervention (action) may be recommended to address the detected event, and transmit the event notification and (optionally) the recommended actions to a notification recipient. Server 120 may communicate the event notification and information about the recommended actions via communications link 130 to network 140, and then to a remote user device.

Server 120 may also be configured to receive a response to an event notification. Server 120 may be further configured to process the response, identify a selected action, translate the selected action into one or more commands (or instructions), and transmit the commands/instructions to network device 110 to cause network device 110 to execute the commands/instructions to address the particular event.

Communications link 130 may be any type of a communications link, a tunnel or any type of a connection configured to receive and transmit data.

Network 140 may be any type of data communications network configured to exchange data. For example, network 140 may be a local area network (LAN), a wide area network (WAN), an Ethernet network, a service provider network, a wireless network with one or more communications towers 142, or any type of network known in the industry.

In network 140, one or more communications channels 144 may be established and used to communicate data between network device 110, server 120, and remote user devices 152 - 156.

Remote user devices 152 ...156 are devices communicatively coupled to network 140 and configured to communicate directly with network device 110, or directly with server 120 and indirectly with network device 110. Each of remote devices 152 ... 156 may be any type of a client device, such as a user device, system administrator device, management device or any other types of device configured to receive notifications from other devices.

Remote user devices 152 ... 156 may comprise any quantity and any type of computerized devices, such as a tablet 152, a personal computer 153, a laptop 154, a mobile phone 155, or a telephone 156. Although not depicted in FIG. 1, remote devices 152 ... 156 may also comprise computer servers, PDAs, and any other device configured to receive, process and transmit data.

Remote user devices 152-156 may be configured to receive information, process the information, formulate a response and transmit the response to a destination. Specifically, remote devices 152 ... 156 may be configured to receive event information from one or more network devices 110 and/or one or more servers 120. Remote devices 152 ... 156 may also be configured to display the information for a user, receive user input and transmit the user input to a destination.

In particular, upon receiving an event notification at a tablet 152 (or a PC 153, or a laptop 154), an application executed at a tablet 152 may cause displaying on the tablet display the event notification and one or more recommended actions for a user, and await a user input. Once the user selects one of the recommended actions, and enters his selection via a tabled input device, tablet 152 receives the selection, and communicates the user input to a destination. For example, tablet 152 may initiate a communications channel 144 via a communications link 132 to network 140, and then via a communications link 130 directly to network device 110. Alternatively, tablet 152 may initiate a communications channel 144 via a communications link 132 to network 140, and then via a communications link 130, to server 120, and then to network device 110.

A mobile device 155 may receive an event notification in a variety of ways. For example, mobile device 155 may receive a text message as an event notification. Mobile device 155 may also receive a phone call describing the event notification. Also, mobile device 155 may receive a voice message containing the event notification. Upon receiving and displaying the event notification, mobile device 155 may await user input indicating a selected action and transmit the selected action as, for example, a text message, or any other form of feedback to network device 110 or server 120.

A telephone 156 may receive a phone call comprising an event notification. Once a user accepts the call, a telephone application may provide an audio menu with various options for the user to select. The options may correspond to one or more recommended actions, from which the user may choose a selected action. Once the user makes a selection, the selection may be sent to the server 120 or network device 110 in a form of feedback to the provided menu.

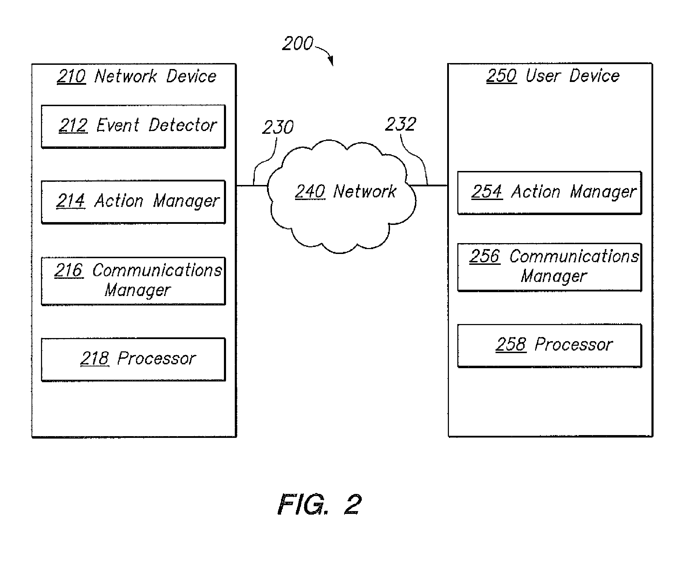

FIG. 2 is a block diagram that depicts an example system for managing remote notifications and actions. An example system 200 comprises a network device 210, communications links 230 and 232, a network 240, and a user device 250. In an embodiment, network device 210 corresponds to network device 110 of FIG. 1, communications links 230 and 232 correspond to communications links 130 and 132, respectively, of FIG.1, network 240 corresponds to network 140 of FIG. 1, and user device 250 corresponds to any of remote user devices 152 - 156, of FIG. 1.

In an embodiment, network device 210 comprises one or more modules. In the example depicted in FIG. 2, network device 210 comprises an event detector 212, an action manager 214, a communications manager 216 and one or more processors 218. Some embodiments of network device 210 may comprise all modules 212, 214, 216 and/or 218; other embodiments of network device 210 may comprise other modules in addition to modules 212, 214, 216 and 218; yet other embodiments of network device 210 may comprise some, but not all, modules 212, 214, 216 and 218.

In an embodiment, an event detector 212 is configured to detect events occurring on network device 210. For example, event detector 212 may monitor execution of various applications on network device 210, and intercept events occurring during the application execution. In particular, if network device 210 is a print device, then event detector 212 may be configured to monitor receiving and executing print job by network device 210, and detect the events indicating whether the execution has been successful or failed.

Event detector 212 may also be configured to create a notification indicating a detected event, and communicating the notification to an action manager 214 of network device 210. Alternatively, event detector 212 may be configured to communicate an event notification to a communications manager 216, which in turn may communicate the event notification to an external server (not depicted in FIG. 1). If the event information is communicated to an external server, then an action manger module of the external server may perform the functions described below in reference to action manger 214 of network device 210.

In an embodiment, an action manager 214 is configured to receive an event notification, process the notification, and determine whether any action to remedy the event indicated in the event notification may be recommended. For example, for a particular event, action manager 214 may determine whether any actions should be performed, and if so, what type of actions may be recommended, and what action(s) could be recommended as the intervention.

Action manager 214 may also be configured to determine a notification recipient (or recipients) to whom a notification should be sent. If any actions to remedy the event specified in the notification are recommended, then a selection of a notification recipient should also take into consideration whether the notification recipient may be capable of performing the recommended actions.

Action manager 214 may also be configured to determine the best way of communicating an event notification to a notification recipient. For example, action manager 214 may determine whether a notification recipient specified a preferred communications method. If the preferred communications method has been specified, then action manager 214 retrieves information about the preferred communications method and associates that information with the notification. However, if a preferred communications method has not been specified by a notification recipient, then action manager 214 may retrieve information about a default communications method and associate that information with the notification.

Action manager 214 may further be configured to send a notification, information about a notification recipient, information about either preferred or default communications method, and optionally, one or more recommended actions, if such have been identified, to a communications manager 216.

Action manager 214 may also be configured to receive information about a selected action that a notification recipient would like to have performed on network device 210 to remedy a problem indicated in a notification. Upon receiving the selected action information, action manager 214 may translate the selected action information to one or more commands that network device 210 can understand, and initiate execution of the one or more commands. Execution of the one or more commands on network device 210 could, most likely, remedy the problem indicated in the notification sent to the notification recipient.

In an embodiment, a communications manager 216 is configured to receive various types of information from action manager 214. For example, communication manager 216 may receive a notification, information about a notification recipient, information about either preferred or default communications method, and optionally, one or more recommended actions, if such have been identified.

Further, communications manager 216 may be configured to send a received notification and one or more recommended actions to a notification recipient using either a preferred or default communications method. The information may be sent either directly to the notification recipient, such as user device 250. Alternatively, as it is depicted in FIG. 2, the information may be sent via link 230 to network 240, and then via link 232 to user device 250.

Communications manager 216 may also be configured to receive information from network 240. The received information may indicate a selected action that a user of user device 250 would like to have performed on network device 210.

In an embodiment, communications manager 216 is also configured to send the received action information to action manager 214, which as described above, can translate the action information to one or more commands that network device 210 can understand and perform.

A processor 218 is configured to process code instructions of modules identified in network device 210. Processor 218 may implement the processes described herein using hardware logic such as in an application-specific integrated circuit (ASIC), field-programmable gate array (FPGA), system-on-a-chip (SoC) or other combinations of hardware, firmware and/or software.

A network 240 may be any type of data communications network configured to exchange data. For example, network 240 may be a local area network (LAN), a wide area network (WAN), an Ethernet network, a service provider network, or any type of a network known in the industry.

A user device 250 may be any type of computer device communicatively coupled to network 240 and configured to communicate directly or indirectly with network device 210. User device 250 may be any type of a user device, a system administrator device, a management device or any other type of device configured to receive notifications from other devices. Examples of user device 250 comprise a wireless device, a mobile device, a PC, a laptop, a tablet, a PDA, a server, a router, or any other device configured to receive, process and transmit data.

In an embodiment, user device 250 comprises one or more modules, such as an action manager 254, a communications manager 256 and a processor 258. Embodiments may comprise each of the above modules, or may comprise additional or other modules, not depicted in FIG. 2.

A communications module 256 may be configured to receive event notifications. An event notification may be received directly or indirectly from network device 210, and may indicate an event detected in network device 210. Communications module 256 may send the notification to an action manager 254 for further processing.

In an embodiment, communications module 256 is also configured to receive data from action manager 254 and communicate the data, directly or indirectly, to network device 210.

An action manager 254 may be configured to display, play, or otherwise present a notification to a user. For example, action manager 254 may be configured to display a notification in a form of an email on a user laptop, or to play an audio menu on a user mobile phone.

Furthermore, action manager 254 may be configured to receive a user selection to the options displayed or played for the user, and communicate the user selection to communications manager 256. For example, if action manager 254 displayed a few recommended actions to remedy a paper jam that occurred in a particular printer, and the user selected one of the recommended actions, then action manager 254 may receive the user selection, and communicate the user selection to communications manager 256.

Processor 258 may implement the processes described herein using hardware logic such as in an application-specific integrated circuit (ASIC), field-programmable gate array (FPGA), system-on-a-chip (SoC) or other combinations of hardware, firmware and/or software.

### III. EVENT NOTIFICATIONS

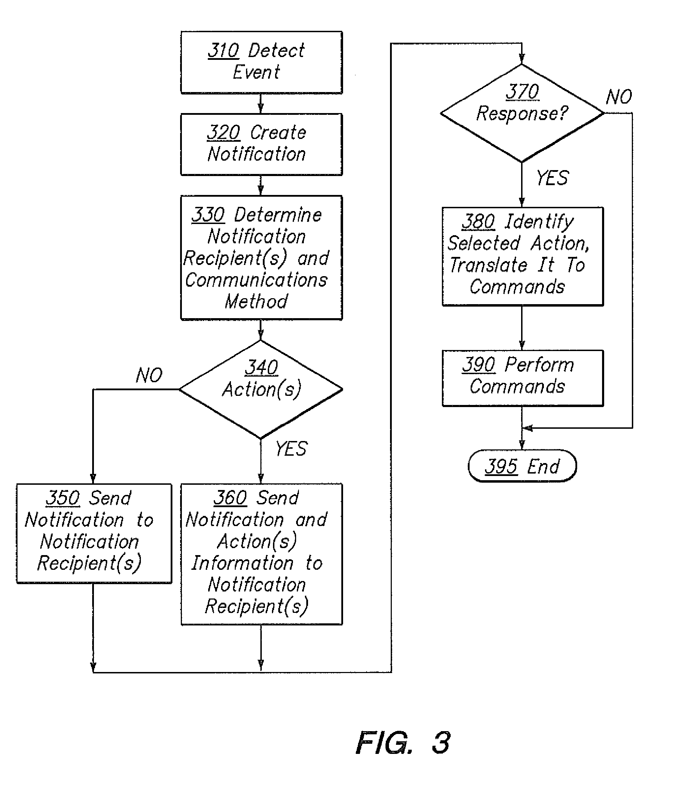

FIG. 3 is a flow chart that depicts example steps performed by a remote notification and action system. The example steps may be performed by any type of network device, such as a network device 110 of FIG. 1, or a network device 210 of FIG. 2.

In the context of print devices, the steps depicted in FIG. 3 may be performed by for example, a print device, a fax machine, a multifunctional print device, or any other device capable of executing print jobs. For the purpose of illustration, examples described below refer to a print device such as a printer; however, the examples should not be considered as limiting in reference to the presented approach.

In step 310, an event occurring on a network device is detected. For example, an application executed on a printer may detect that printing of a particular print job was successfully completed. According to another example, an application executed on the printer may detect that printing of a particular print job failed because there was no paper in a paper tray. Other examples of events are described above.

In step 320, a notification indicating a detected event is created. A notification may be created in a variety of ways. For example, a detected event may be first analyzed and classifed into one of many event categories. Then, a notification message may be created, and a classification identifier may be included in the notification. A notification message may also include a brief description of the detected event, a status, a warning, or an error message related to the event. Other methods describing the detected event in a notification are also contemplated.

In step 330, a notification recipient (or recipients) for is identified. A notification recipient is an individual or an entity that should receive a notification indicating a detected event. For example, if a notification pertains to a successful completion of a particular print job, then, most likely, a notification recipient may be the user who sent the particular print job. However, if a notification pertains to malfunctioning of a particular print device, then, most likely, a notification recipient may be a system administrator who is qualified to test and repair print devices.

In some situations, a plurality of notification recipients may be identified for a notification. This may occur when there is a need to communicate a notification to many recipients. For example, if there is a need to report certain events to users, system administrators, maintenance engineers and/or system managers, then a list of notification recipients may be determined to allow sending a copy of the notification to each recipient included in the list.

Also in step 330, a communications method for each notification recipient is determined. If a preferred communications method for a notification recipient is defined or otherwise provided, then the preferred communications method is retrieved and may be used in steps 350/360, described below. However, if a preferred communications method for a notification recipient is not defined, then a default communications method is retrieved and may be used in step 350/360, described below.

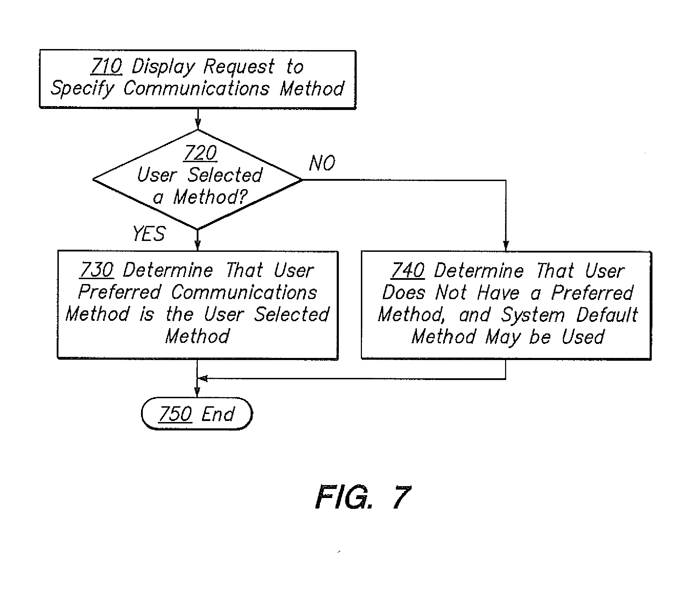

Information about a preferred communications method and/or default communications method may be stored in storage of a network device that executes the steps depicted in FIG. 3, or in storage associated with a separate server. The information about preferred or default communications methods may be generated at the time a user subscribes to the services offered by the network devices, and the information may be stored in a server dedicated to storing user profiles. For example, when a user subscribes to the services, a user profile may be created for the user, and the user profile may be stored on the user profile server. One of the approaches for generating and storing information related to user communications method in a user profile server is depicted in FIG. 7.

FIG. 7 is a flow chart that depicts an example process of defining a communications method for a user. A process of defining a communications method for a user may be performed independently from detecting events and processing notification on a network device. For example, the process of defining a communications method may be performed in advance and by an application executed on a device other than the network device. For instance, the process may be performed by an application executed on a user profile server or any other server or device configured to collect data from a user.

A process of defining a communications method for a user may be implemented in a software application that updates a user profile for the user or that updates any other data structure that stores user configuration for the user. Although a process of defining a communications method is described below in the context of creating and updating user profiles, other implementations of the process may be pursued.

In step 710, a request to specify a communications method is generated by a server application and displayed for a user. For example, as a user profile is created for a user, a user profile application may generate a request to specify a preferred communications method via which the user wishes to communicate with a particular network device, and display the request for the user. Alternatively, a user may invoke a user profile application each time when he wishes to update his profile. Once invoked, the user profile application may allow the user to either overwrite the user's previous selection or provide a new selection of a preferred communications method for the user.

A request may be displayed in a form of a question and/or a menu comprising a description of one or more communications methods. The menu may be interactive and allow the user to select a preferred communications method from the one or more displayed communications method. The menu may also have an option allowing the user to forgo the request and bypass the selection of the preferred communications method.

In step 720, it is determined whether a user selected one method from one or more communications method displayed for the user in a menu. If the user selected one communications method, then, in step 730, the selected method is assumed to be a preferred communications method, and the information indicating the preferred communications method is stored in a user profile. Subsequently, the process proceeds to step 750, which ends the preferred method selection process.

However, if in step 720, it is determined that a user has not selected any method from one or more communications method displayed for the user in a menu, then, in step 740, it is assumed that the user does not have a preferred communications method, and that if needed, a default communications method may be used to communicate notifications from a network device to the user. Subsequently, the process proceeds to step 750, which ends the preferred method selection process.

Referring again to FIG. 3, if in step 330, a list of notification recipients has been determined for a particular notification, then for each notification recipient from the list, a preferred communications method may be determined. The preferred communications methods for the notification recipients may be different for some recipients, and/or may be the same for other recipients.

However, if a preferred communications method for a notification recipient has not been defined or otherwise provided, then a default communications method is retrieved and may be used in steps 350/360 below. Examples of default communications methods are described above.

In step 340, a detected event is further analyzed to determine whether the detected event needs to be remedied, and if so, whether any action may be recommended to remedy the detected event. For example, if a detected event is merely a message indicating a successful completion of a particular task, then no remedial action may be needed.

If no action may be identified to recommend in connection with a detected event, then the system proceeds to step 350, in which a notification indicating the detected event is sent to a notification recipient. The notification may be sent using a preferred communications method or a default communications method. The type of communications method depends on the method that has been determined in step 330 (above).

In situation when more than one notification recipients have been identified in step 330, but no action has been identified as recommended to remedy the problem indicated in a notification, in step 350, a copy of notification indicating the detected event is sent to each notification recipient included in a list of notification recipients. The copies are sent according to a preferred or default communications method identified for the respective notification recipients in step 330.

However, in some situations, one or more recommended actions in connection with a detected event may be identified in step 340. For example, if a detected event is an error message indicating that a printing on a particular printer is unavailable because of a paper jam in the printer, then a remedial action, such as removing the paper jam, may be recommended.

In some situations, more than one remedial action that may be recommended to remedy a problem indicated in a notification of a detected event. For example, in a case of a paper jam in a particular printer, one remedial action may pertain to recommending that the paper jam be removed, while another remedial action may pertain to saving a print job in a file for a future printing. Other remedial actions may also be identified.

Once one or more recommended actions have been identified, the process proceeds to step 360, in which a notification indicating a detected event and information about the one or more recommended actions are sent to one or more notification recipients and using respective preferred and/or default communications methods. Selection of the preferred methods and default communications methods was described in step 330.

In an embodiment, a network device transmits a notification (and, ifpossible, information about one or more recommended actions) to notification recipients to allow the notification recipients to review the notification and determine a course of action to address a problem indicated in the notification.

### IV. RESPONSES TO NOTIFICATIONS

In some cases, in response to receiving a notification, a user may review the notification. But decide not to send any response to the notification. In such a case, the process depicted in FIG. 3, tests, in step 370, whether a response is received, and if not, the process proceeds to step 395 to end processing of the notification.

In some other cases, upon receiving a notification, a user may display the actions recommended by a network device as potentially suitable for remedying a problem indicated in the notification, and send a response to the network device. The response may indicate a selected action, and a request that the selected action be executed on the network device to remedy the problem indicated in the notification.

In step 370, a network device tests whether a response to a notification sent in step 350/360 was received. Receiving a response to a notification depends on whether a user, who received the notification, has any instructions to the network device and thus, sent the response. For example, if, upon receiving a notification from a network device, a user determined that a selected action should be performed on the network device, and the user sent to a network device a response with information indicating the selected action, then in step 370, the network device may detect receiving such a response.

If a response is received in step 370, then the process proceeds to step 380, in which the response is analyzed, and information about one or more selected actions is identified. The information may identify a selected action or actions.

Selected actions may be identified by action codes, names, or any type of identifiers. For example, information about the selected actions may comprise a sequence of codes, each of which corresponds to one action that can be performed by a network device.

Once one or more selected actions are identified, each of the selected actions may be translated to one or more commands that can be understood by a network device on which an event was detected. The commands may be device-specific, device-language specific or otherwise specific to the network device.

In step 390, one or more commands are executed by a network device. Executing the one or more commands may be equivalent to executing a selected action indicated in a response received by the network device. The execution of the one or more commands may remedy a problem indicated in a notification sent by the network device.

In step 395, a process finishes a notification cycle. As described above, in an embodiment, a notification cycle started from detecting an event, creating and processing a notification for the event, transmitting the notification to a notification recipient, and, optionally, receiving a response to the notification and executing certain commands. Once a new event is detected, the process is resumed from step 310, defined above.

### V. DISPATCHING EVENT NOTIFICATIONS

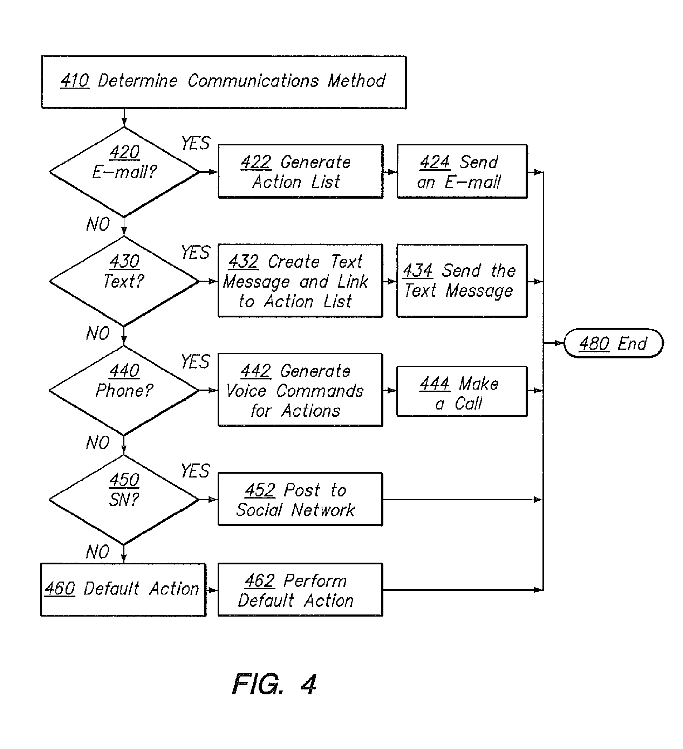

FIG. 4 is a flow chart that depicts an example process of dispatching an event notification. In step 410, a communications method is determined for a notification recipient to whom an event notification should be sent from a network device. As described above, a communications method for a notification recipient may be determined based on a user profile associated with the notification recipient. Such a communications method is referred herein as a preferred communications method because it is the method via which the notification recipient prefers to receive notifications. However, if a preferred communications method is not specified, then a default communications method may be used. Various types of preferred communications methods and default communications methods are described above.

The description below refers to a "communications" method without differentiating whether the communications method is preferred or default.

Decision steps 420, 430, 440 and 450 refer to example steps for determining communications methods, In embodiments, additional or even different decision steps may be implemented.

In step 420, it is determined whether a communications method is an email-based communications method. If so, then in step 422, a notification email is created, and it is determined whether one or more recommended actions pertaining to a detected event can be identified.

If one or more recommended actions are identified, then a list of the one or more recommended actions is generated. The list may comprise various types of information indicating the one or more recommended actions. For example, a recommended action may be represented by a Uniform Resource Locator (URL), and the URL information may be included in the list. Alternatively, a recommended action may be represented by a code and the code information may be included in the list. The list of one or more recommended actions may comprise a combination of URLs, codes and other information identifying the recommended actions.

Also in step 422, a list of recommended actions (if such are available) is included in a notification email.

In step 424, a notification email, comprising a notification and an action list, is sent to a notification recipient. Subsequently, the process proceeds to step 480, in which generating of the notification is ended.

However, if in step 420, it was determined that a communications method was not an email-based communications method, then, in step 430, it is determined whether the communications method is a text-message-based communications method. If so, then in step 432, a notification text message is created, and it is determined whether one or more recommended actions can be identified.

If one or more recommended actions are identified, then, as in step 432, a list of the one or more recommended actions is generated. Also in step 432 a hyperlink to an action list (if such a list is available) may be included in a notification text message.

In step 434, a notification text message, comprising a notification and a hyperlink to an action list is sent to a notification recipient. Subsequently, the process proceeds to step 480, in which generating of the notification is ended.

However, if in step 430, it was determined that a communications method was not a text-message-based communications method, then, in step 440, it is determined whether the communications method is a telephonic method. If so, then, in step 442, a notification call is generated, and it is determined whether one or more recommended actions can be identified.

If one or more recommended actions are identified, then, an audio menu corresponding to the one or more recommended actions is generated. The audio menu may be organized as an association between the actions and menu options, in which the recommended actions are associated with the menu options, and the menu options are associated with keys of a telephone keypad.

Also in step 442, an audio recording indicating a detected event and the menu with an audio menu indicating one or more recommended actions, if such are available, are included in a notification call.

In step 444, a notification call is made and an audio recording is played once the call is accepted by a notification recipient. The call may comprise a voice message indicating a detected problem and an audio menu with options indicating recommended actions, if such are available. Subsequently, the process proceeds to step 480, in which generating of the notification is ended.

However, if in step 440, it was determined that a communications method was not a telephonic method, then, in step 450, it is determined whether the communications method specifies communicating via a social network (or a social medium). If so, then in step 452, it is determined whether one or more recommended actions can be identified. Also in step 452, a notification about a detected event and information about the recommended actions (if such are available) is posted to the social network.

Implementations of posting to a social network may vary. Hence, the specific details of notification posting to a social network depend on how the social network is implemented and accessible. Therefore, it is assumed here that any method of posting a notification to a social network may be used in step 452, depicted in FIG. 4.

Once step 452 is completed, the process proceeds to step 480, in which generating of the notification is ended.

While FIG. 4 depicts testing whether a communications method is any one of email-based communications, text-message-based communications, telephonic communications, or social network communications, other types of communications method may also be implemented.

If a communication method determined in step 410 does not correspond to any of the known or predefined communications methods, then in step 460, it is determined that a default action may be pursued. A default action may be any action that a network device may perform without actually sending a notification to a user device. For example, a default action may comprise logging a notification (and possibly a list of recommended actions) to a system log file maintained on the network device. Alternatively, a default action may comprise creating an error-system-file and storing information related to the notification in the error-system-file.

In step 462, a default action is performed. For example, a notification indicating a detected event is logged into a system log file, or an error-system-file is created and the notification is stored in the error-system-file for a system administrator to review. Subsequently, the process proceeds to step 480, in which generating of the notification is ended.

### VI. GENERATING RESPONSES TO EVENT NOTIFICATIONS

Selecting a particular action as suitable for addressing an event indicated in a received notification may depend on a variety of factors. For example, a selection may be based on the user's experience, user's knowledge of the circumstances surrounding the event, policies and procedures implemented in the organization, convenience, and some other factors. For example, if an event notification indicates that printing of a document on an A4 format paper is not possible because the tray with A4 paper is empty, and the notifications suggest a few recommended actions, a notification recipient may select the action that he thinks is the best at the moment. For instance, if the recommended actions include: 1) replenishing paper in the A4 paper tray, 2) using a tray with a legal-format paper, 3) sending a request to a system administrator to reload the A4 tray with the paper, and 4) saving the print job on a server for a future printing, the user may determine that the particular print job may be completed on the legal-format paper. Thus, the user may select the second action, which suggests redirecting the printing to using the tray with the legal-format paper. However, if it is important to the user that a particular print job uses A4-format paper, then the user may select the third option, which suggests sending a request to a system administrator to reload the A4 try with paper. Alternatively, if the user is located in the vicinity of the particular print device, then the user may just walk up to the printer and reload the A4 paper tray.

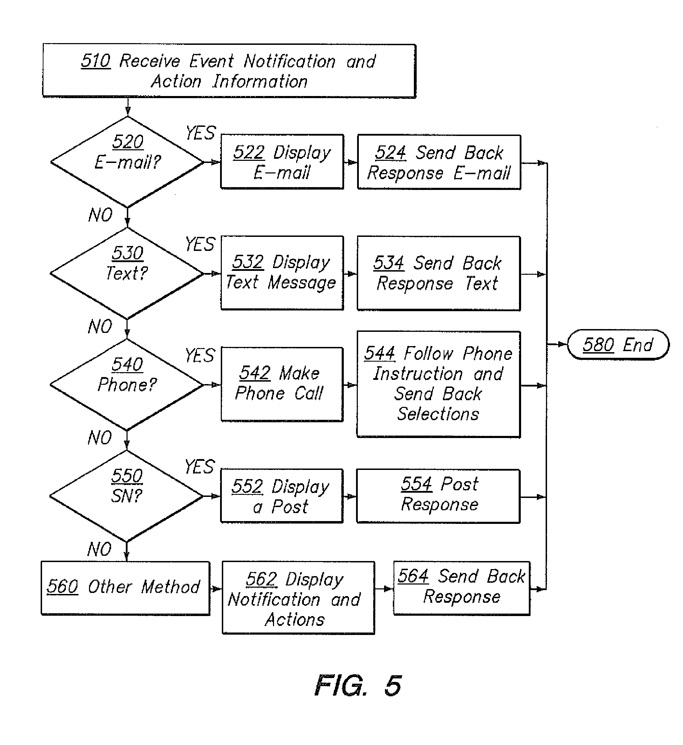

FIG. 5 is a flow chart that depicts an example process of generating a response to an event notification. A process of generating a response to an event notification may be performed by a user who received the event notification on the user device.

For the purpose of illustration clear examples, the description below refers to the situation in which an event notification is sent with information about recommended actions. Other situations, in which event notifications were sent without recommended action information, may be interpreted as simplified variations of the description provided below.

In step 510, event notification and recommended action information is received at a user device.

In step 520, it is determined whether a notification and action information was received in a form of an email. If so, then the email with the event notification and action information is displayed as an email for a user. The event notification and action information may be included in a body of the email. The action information may include information about one or more recommended actions. Further, instructions may be displayed indicating that the user may select one or more recommended actions, and indicate the selected options as the ones to be performed on a network device to remedy a problem indicated in the notification.

In step 524, a process assists a user in generating a response email. In the response email, a user may include information about a particular action, selected from one or more recommended actions displayed for the user. The information about the selected particular action may be a URL to the selected action and may be included in a body of the response email. Also in step 524, the response email is sent to a network device, and the process proceeds to step 580 to end the processing of the response.

In step 530, it is determined whether a notification and action information was received as a text message. If so, then, in step 532, the text message with the event notification and action information is displayed for the user.

In step 534, a process assists a user in creating a response text message. In the response text message, a user may include information about a particular action (URL), selected from one or more recommended actions displayed for the user. Also in step 534, the response text message is sent to a network device, and the process proceeds to step 580 to end the processing of the response.

In step 540, it is determined whether a notification and action information was received as a phone call. If so, the phone call is put through to the user, and, in step 542, an audible version of the notification and an audible menu with one or more recommended actions are played for the user.

In step 544, a process assists a user in following audio menu instructions to navigate through a menu indicating one or more recommended actions. Further, the process collects the user selections and sends the user selections to a network device, and proceeds to step 580 to end the processing of the response.

In step 550, it is determined whether a notification and action information was delivered to a user social network account, and if so, in step 552, a social network post is made available to the user. Since implementations of posting to social networks may vary, any known method of displaying and processing social network posting may be used in step 552.

In step 554, a process assists a user in posting a response to a social network. Since implementations of posting to social networks may vary, any known method of generating and submitting a posting to the social network may be used in step 554. The response may include a selected action that the user selected as suitable to remedy the problem indicated in the received notification.

In step 560, it is determined whether a notification and action information should be displayed using any other, not mentioned above, method. If so, in step 562, the received notification and action information is displayed for the user using a particular method.

In step 564, a process assists a user in selecting a particular action from one or more recommended actions, and in preparing a response including the selected particular action. Furthermore, in step 564, the process sends the response to a network device and proceeds to step 580 to end the processing of the response.

### VII. PROCESSING RESPONSES TO EVENT NOTIFICATIONS

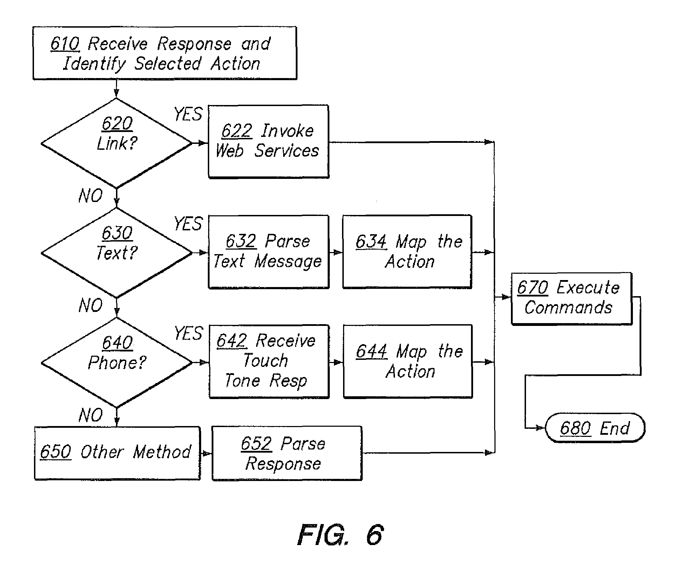

FIG. 6 is a flow chart that depicts an example of processing a response received by a network device. The depicted processing of the received response may be executed by an application launched on a network device that sent a notification.

In step 610, a response from a user device is received by a network device. The response may, but does not have to, include information about a selected action that the user requested that be performed on the network device. If the information about the selected action is included in the response, then the selected action information is extracted from the notification.

In step 620, it is determined whether selected action information is in a form of a web link. If so, then in step 622, the process invokes web services, launches a web page addressed by the web link that identifies one or more commands that correspond to the selected actions, and that a network device can understand. Then, the process proceeds to step 670, in which the commands are executed to remedy a problem identified in a notification, and proceeds to step 680 to end processing of the response.

In step 630, it is determined whether selected action information is in a form of a text message. If so, then in step 632, the text message is parsed to identify the selected action, and in step 634, the selected action is mapped onto one or more commands, which a network device can understand and execute. Then, in step 670, the commands are executed to remedy a problem identified in a detected event, and proceeds to step 680 to end processing of the response.

In step 640, it is determined whether selected action information was communicated via a telephone, and if so, in step 642, the process accepts a touch-tone response, and parses the response to identify a selected action.

In step 644, a selected action is mapped onto one or more commands, which a network device can understand and execute. Then, in step 670, the commands are executed to remedy a problem identified in a detected event, and proceeds to step 680 to end processing of the response.

In step 650, it is determined whether selected action information was communicated using any method other than the methods described in steps 620, 630, and 640. If so, the communications method is identified, and, in step 652, the response is parsed, one or more commands understood by a network device are identified, and, in step 670, the one or more commands are performed on the network device. Then, the process proceeds to step 680 to end processing of the response.

Other methods and approaches for receiving a response to an event notification and for performing a selected action identified in the received response may also be implemented.

### VIII. IMPLEMENTATION MECHANISMS

Although the flow diagrams of the present application depict a particular set of steps in a particular order, other implementations may use fewer or more steps, in the same or different order, than those depicted in the figures.

According to one embodiment, the techniques described herein are implemented by one or more special-purpose computing devices. The special-purpose computing devices may be hard-wired to perform the techniques, or may include digital electronic devices such as one or more application-specific integrated circuits (ASICs) or field programmable gate arrays (FPGAs) that are persistently programmed to perform the techniques, or may include one or more general purpose hardware processors programmed to perform the techniques pursuant to program instructions in firmware, memory, other storage, or a combination. Such special-purpose computing devices may also combine custom hard-wired logic, ASICs, or FPGAs with custom programming to accomplish the techniques. The special-purpose computing devices may be desktop computer systems, mobile computer systems, handheld devices, networking devices or any other device that incorporates hard-wired and/or program logic to implement the techniques.

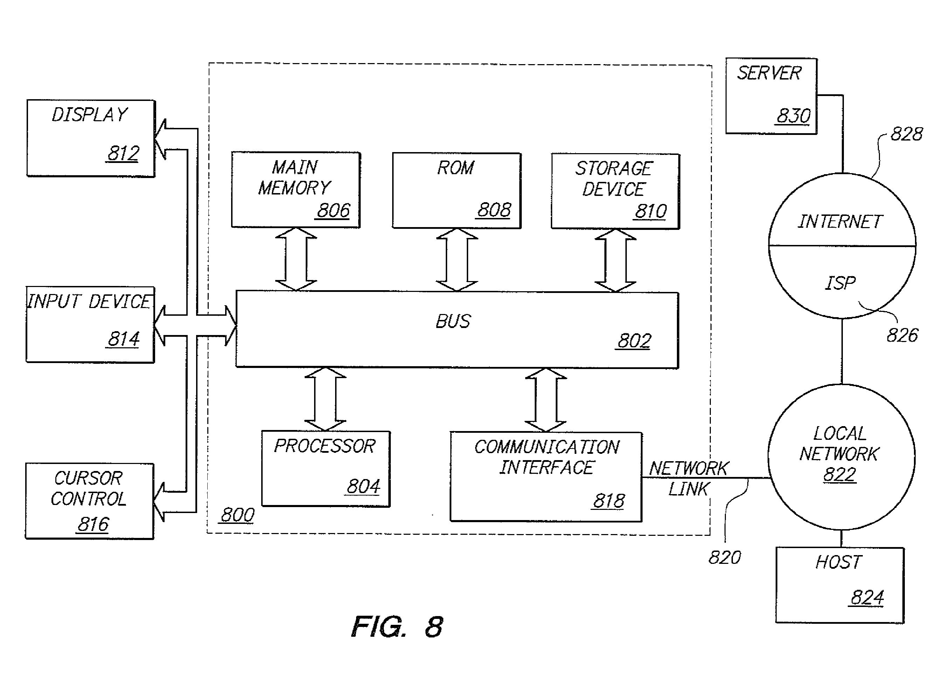

FIG. 8 is a block diagram that depicts an example computer system 800 upon which embodiments may be implemented. Computer system 800 includes a bus 802 or other communication mechanism for communicating information, and a processor 804 coupled with bus 802 for processing information. Computer system 800 also includes a main memory 806, such as a random access memory (RAM) or other dynamic storage device, coupled to bus 802 for storing information and instructions to be executed by processor 804. Main memory 806 also may be used for storing temporary variables or other intermediate information during execution of instructions to be executed by processor 804. Computer system 800 further includes a read only memory (ROM) 808 or other static storage device coupled to bus 802 for storing static information and instructions for processor 804. A storage device 810, such as a magnetic disk or optical disk, is provided and coupled to bus 802 for storing information and instructions.

Computer system 800 may be coupled via bus 802 to a display 812, such as a cathode ray tube (CRT), for displaying information to a computer user. An input device 814, including alphanumeric and other keys, is coupled to bus 802 for communicating information and command selections to processor 804, Another type of user input device is cursor control 816, such as a mouse, a trackball, or cursor direction keys for communicating direction information and command selections to processor 804 and for controlling cursor movement on display 812. This input device typically has two degrees of freedom in two axes, a first axis (e.g., x) and a second axis (e.g., y), that allows the device to specify positions in a plane.

Computer system 800 may implement the techniques described herein using customized hard-wired logic, one or more ASICs or FPGAs, firmware and/or program logic or computer software which, in combination with the computer system, causes or programs computer system 800 to be a special-purpose machine. According to one embodiment, those techniques are performed by computer system 800 in response to processor 804 executing one or more sequences of one or more instructions contained in main memory 806. Such instructions may be read into main memory 806 from another computer-readable medium, such as storage device 810. Execution of the sequences of instructions contained in main memory 806 causes processor 804 to perform the process steps described herein. In alternative embodiments, hard-wired circuitry may be used in place of or in combination with software instructions to implement the invention. Thus, embodiments are not limited to any specific combination of hardware circuitry and software.

The term "computer-readable medium" as used herein refers to any medium that participates in providing data that causes a computer to operation in a specific manner. In an embodiment implemented using computer system 800, various computer-readable media are involved, for example, in providing instructions to processor 804 for execution. Such a medium may take many forms, including but not limited to, non-volatile media and volatile media. Non-volatile media includes, for example, optical or magnetic disks, such as storage device 810. Volatile media includes dynamic memory, such as main memory 806. Common forms of computer-readable media include, for example, a floppy disk, a flexible disk, hard disk, magnetic tape, or any other magnetic medium, a CD-ROM, any other optical medium, a RAM, a PROM, and EPROM, a FLASH-EPROM, any other memory chip or memory cartridge, or any other medium from which a computer can read.

Various forms of computer-readable media may be involved in carrying one or more sequences of one or more instructions to processor 804 for execution. For example, the instructions may initially be carried on a magnetic disk of a remote computer. The remote computer can load the instructions into its dynamic memory and send the instructions over a telephone line using a modem. A modem local to computer system 800 can receive the data on the telephone line and use an infra-red transmitter to convert the data to an infra-red signal. An infra-red detector can receive the data carried in the infra-red signal and appropriate circuitry can place the data on bus 802. Bus 802 carries the data to main memory 806, from which processor 804 retrieves and executes the instructions. The instructions received by main memory 806 may optionally be stored on storage device 810 either before or after execution by processor 804.

Computer system 800 also includes a communication interface 818 coupled to bus 802. Communication interface 818 provides a two-way data communication coupling to a network link 820 that is connected to a local network 822. For example, communication interface 818 may be an integrated services digital network (ISDN) card or a modem to provide a data communication connection to a corresponding type of telephone line. As another example, communication interface 818 may be a local area network (LAN) card to provide a data communication connection to a compatible LAN. Wireless links may also be implemented. In any such implementation, communication interface 818 sends and receives electrical, electromagnetic or optical signals that carry digital data streams representing various types of information.

Network link 820 typically provides data communication through one or more networks to other data devices. For example, network link 820 may provide a connection through local network 822 to a host computer 824 or to data equipment operated by an Internet Service Provider (ISP) 826. ISP 826 in turn provides data communication services through the world wide packet data communication network now commonly referred to as the "Internet" 828. Local network 822 and Internet 828 both use electrical, electromagnetic or optical signals that carry digital data streams.

Computer system 800 can send messages and receive data, including program code, through the network(s), network link 820 and communication interface 818. In the Internet example, a server 830 might transmit a requested code for an application program through Internet 828, ISP 826, local network 822 and communication interface 818. The received code may be executed by processor 804 as it is received, and/or stored in storage device 810, or other non-volatile storage for later execution.

## Claims

1. A method comprising:
detecting that an event occurred at a network device;
determining a type of the event;
based, at least in part, on the type of the event, determining a notification recipient and whether any action should be performed to address the event;
in response to determining an action should be performed to address the event:
determining one or more actions, which the notification recipient is authorized to perform;
determining whether a preferred communications method for the notification recipient is specified;
in response to determining that the preferred communications method for the notification recipient is specified, transmitting a notification specifying the event and the one or more actions to the notification recipient according to the preferred communications method;
wherein the method is performed by one or more computing devices.

2. The method of Claim 1, further comprising:
in response to transmitting the notification specifying the event and the one or more actions to the notification recipient, receiving data indicating a user selection of a particular action to be performed with respect to the network device;
based at least in part on the user selection of the particular action, determining one or more commands, execution of which causes execution of the particular action;
executing the one or more commands with respect to the network device.

3. The method of Claim 1, further comprising:
in response to determining that the preferred communications method for communicating with the notification recipient is not specified, selecting a default communications method and transmitting the notification specifying the event and the one or more actions to the notification recipient according to the default communications method.

4. The method of Claim 3, further comprising:
in response to determining that no action should be performed to address the event:
transmitting the notification specifying the event to the notification recipient according to the preferred communications method or the default communications method.

5. The method of Claim 1, wherein the event notification comprises any one of: a warning, an error notification, a warning exception, a communications problem, a printing problem, and a maintenance notification.

6. The method of Claim 1,
wherein the preferred communications method is defined by a system administrator;
wherein a user provided definition of the preferred communications method is included in a user individual profile;
wherein the preferred communications method comprises any one of: an email, a text message, a phone call, a social media, and other media of communicating information.

7. The method of Claim 3, wherein the data indicating a user selection of a particular action to be performed with respect to the network device is received according to the preferred communications method or the default communications method.

8. A non-transitory computer readable storage medium, storing one or more instructions which, when executed by one or more processors, cause the one or more processors to perform:
detecting that an event occurred at a network device;
determining a type of the event;
based, at least in part, on the type of the event, determining a notification recipient and whether any action should be performed to address the event;
in response to determining an action should be performed to address the event:
determining one or more actions, which the notification recipient is authorized to perform;
determining whether a preferred communications method for the notification recipient is specified;
in response to determining that the preferred communications method for the notification recipient is specified, transmitting a notification specifying the event and the one or more actions to the notification recipient according to the preferred communications method;
wherein the method is performed by one or more computing devices.

9. The non-transitory computer readable storage medium of Claim 8, further comprising instructions which, when executed, cause the one or more processors to perform:
in response to transmitting the notification specifying the event and the one or more actions to the notification recipient, receiving data indicating a user selection of a particular action to be performed with respect to the network device;
based at least in part on the user selection of the particular action, determining one or more commands, execution of which causes execution of the particular action;
executing the one or more commands with respect to the network device.

10. The non-transitory computer readable storage medium of Claim 8, further comprising instructions which, when executed, cause the one or more processors to perform:
in response to determining that the preferred communications method for communicating with the notification recipient is not specified, selecting a default communications method and transmitting the notification specifying the event and the one or more actions to the notification recipient according to the default communications method.

11. The non-transitory computer readable storage medium of Claim 10, further comprising instructions which, when executed, cause the one or more processors to perform:
in response to determining that no action should be performed to address the event:
transmitting the notification specifying the event to the notification recipient according to the preferred communications method or the default communications method.

12. The non-transitory computer readable storage medium of Claim 8, wherein the event notification comprises any one of: a warning, an error notification, a warning exception, a communications problem, a printing problem, and a maintenance notification.

13. The non-transitory computer readable storage medium of Claim 8,
wherein the preferred communications method is defined by a system administrator;
wherein a user provided definition of the preferred communications method is included in a user individual profile;
wherein the preferred communications method comprises any one of: an email, a text message, a phone call, a social media, and other media of communicating information.

14. The non-transitory computer readable storage medium of Claim 10, wherein the data indicating a user selection of a particular action to be performed with respect to the network device is received according to the preferred communications method or the default communications method.

15. An apparatus comprising:
one or more processors,
an event detection unit configured to detect that an event occurred at a network device;
an event processing unit configured to:
determine a type of the event;
based, at least in part, on the type of the event, determine a notification recipient and whether any action should be performed to address the event;
an action unit configured to:
in response to determining an action should be performed to address the event:
determine one or more actions, which the notification recipient is authorized to perform;
determine whether a preferred communications method for the notification recipient is specified;
a notification unit configured to:
in response to determining that the preferred communications method for the notification recipient is specified, transmit a notification specifying the event and the one or more actions to the notification recipient according to the preferred communications method;
wherein the method is performed by one or more computing devices.
